# EUROPÄISCHE PATENTSCHRIFT

(11) **EP 0 374 612 B1**
(45) Veröffentlichungstag und Bekanntmachung des Hinweises auf die Patenterteilung: **13.10.1993**
(21) Anmeldenummer: 89122608.6
(22) Anmeldetag: 07.12.1989
(51) Int. Cl.: H02K 5/128

(54) **Spaltrohr-Elektromotor**
Gap tube electric motor
Moteur électrique à manchon d'entrefer

(30) Priorität: 23.12.1988 DE 3843477
(43) Veröffentlichungstag der Anmeldung: 27.06.1990
(73) Patentinhaber: WILO GmbH, D-44263 Dortmund (DE)
(72) Erfinder: Kech, Hans-Jürgen, D-5804 Herdecke (DE)
(74) Vertreter: COHAUSZ HASE DAWIDOWICZ & PARTNER

(56) Entgegenhaltungen:
- EP-A- 0 095 958
- FR-A- 2 533 976

## Beschreibung

Die Erfindung betrifft einen, wie im EP-A-2 533 976 gezeigten Spaltrohr-Elektromotor, insbesondere für eine Pumpe, mit einem Statorblechpaket, das den Spalt(rohr)topf umgibt und von Wicklungen durchdrungen ist, die das Statorblechpaket zu beiden Seiten überragen, wobei der Spalttopf an demjenigen Ende geschlossen ist, und damit seinen Boden bildet, das der Seite gegenüberliegt, an der die Antriebsachse des Motors heraustritt, wobei der Boden des Spalttopfes nach außen gewölbt ist und die Wicklung einer Seite des Statorblechpaketes entsprechend gewölbt ist.

Spaltrohrmotoren für Heizungsumwälzpumpen sind in zylindrischer Bauweise sowie als Scheibenläufer und als Kugelmotor bekannt. Bei diesen Konstruktionen ist der Stator vom Rotor metallisch getrennt und abgedichtet. In der zylindrischen Bauweise erfolgt dies durch ein Metallspaltrohr. Der Rotor wird innerhalb dieses Rohres durch das Fördermedium (Heizungswasser) gekühlt, das auch die Lagerung schmiert und dämpft.

Die für die Konstruktionen angewandten Fertigungsverfahren für Stator und Rotor unterscheiden sich in der Statorfertigung nur unwesentlich von Verfahren für Trockenläufer-Asynchronmotoren. Der Automatisierungsgrad wird hierbei wesentlich vom technischen Konzept des Stators und dessen charakteristischen Konstruktionsmerkmalen bestimmt, wie z.B. durch daen Wicklungsaufbau. Erschwerend wirkt speziell bei der Statorfertigung, daß die einzelnen Fertigungsstationen sich in der Möglichkeit zur Automatisierung der erforderlichen Wicklungsgeometrie stark unterscheiden. Dies erschwert vor allem die vollautomatische Verkettung einzelner Fertigungsstationen innerhalb der Statorfertigung.

Bekannt ist heute ebenfalls der Einsatz von zylindrischen Statorwicklungen mit offenen und geschlossenen Spalttöpfen. Die zylindrischen Statorwicklungen sind dabei mit sogenannten Wickelkopfkappen oder in bandagierter Ausführung über erforderliche Luftstrecken gegen das metallische Spaltrohr isolierend angeordnet. Die Einziehebene der Wicklung (Einziehwerkzeug) oder die Position der Spulen im Statorraum muß in diesem Fall so gewählt werden, daß der Nutraum (Spule) elektrisch nicht voll genutzt werden kann; Die Nutausnutzung beträgt ca. 50% - 65%. Eine weitere Minimierung der Motorabmessungen unter Beibehaltung einer zylindrischen Wicklung, z.B. mit Wickelkopfkappen oder mit Bandagierung zur Einhaltung von Luftstrecken gegenüber dem Spaltrohr, Lagerschild oder Motorgehäuse stößt an Grenzen der thermischen Motorbelastung oder der elektromagnetischen Ausnutzung der Maschine. Die Ursache ist in dem durch die Minimierung ebenfalls reduzierten Wasservolumen des Spaltrohr- oder Rotorraumes zu sehen, sowie der schlechten Nutausnutzung. Maschinen der erfindungsgemäßen Leistungsgröße (kleiner 500W) und mechanischen Konfiguration haben ihre größten Verluste im Ständer, sogenannte Cu- oder Stromwärmeverluste. Bei den bisherigen Konstruktionsprinzipien wirken die elektrischen Isolationsstrecken (Luft oder Kunststoff) im Wärmefluß zum Fördermedium wärmeisolierend.

Aufgabe der Erfindung ist es einen Spaltrohr-Elektromotor zu schaffen mit einem höheren Ausnutzungsgrad bei kleineren Abmessungen und mit einer Steigerung der Automatisierung der Herstellung durch weitere Verkettung der Fertigungsstationen.

Diese Aufgabe wird erfindungsgemäß dadurch gelöst, daß die Wicklungen an der gewölbten Fläche des Spalttopfbodens außen anliegen und daß die Wicklungen am Spalttopfboden außen angebacken bzw. angeklebt sind.

Beim erfindungsgemäßen Herstellungsverfahren wird der Stator soweit auf den Spalttopf aufgeschoben, bis der insbesondere kalottenförmige Wicklungsbereich des Wicklungskopfes auf dem Spalttopfboden aufliegt und auf diesem verbacken wird.

Das neue Konzept unterscheidet sich von dem bisherigen (zylindrische Stator-/Rotorbauweise) durch den Wicklungsaufbau der Statorwicklung, ausgeführt mit einem nach außen gewölbten Spalttopfboden, insbesondere als Kalottenwicklung. Voraussetzung für diese Ausführung ist der Übergang von einem zylindrischen, beidseitig geöffneten Spaltrohr in einen sogenannten Spalttopf. Das Ende des Spalttopfes muß dabei zur Abstützung der Wicklung kalottenförmig ausgeführt werden; d.h. Wicklung und Spalttopf sind konturengleich.

Mit der kalottenförmigen Wicklung in Verbindung mit dem geschlossenen Spalttopf können diese Probleme eliminiert werden. Die Wicklung wird dabei mit einem verbackungsfähigen Kupferlackdraht ausgeführt und mechanisch über die gesamte innere Wicklungsoberfläche mit dem Spalttopf homogen verbunden; d.h. die Wicklung wird mit dem metallischen Spalttopf radial wie axial flächig anliegend, verbacken. Die elektrische Isolierung erfolgt dabei über eine Pulverbeschichtung (Epoxydharz) des Spalttopfes. Die Beschichtung wird so gewählt, daß ein sehr guter Wärmeübergang von der Statorwicklung zum Spaltrohr- und Pumpenraum (Naßraum) erreicht wird; damit kann eine bessere Abfuhr der Wärmeverlustleistung des Motors an das Fördermedium erzielt werden. Dieses neue Konstruktionsprinzip öffnet dabei weitere Möglichkeiten der Fertigungsrationalisierung durch Reduktion der bisherigen Fertigungsschritte und durch stärkere Verkettung der einzelnen Fertigungsstationen. Durch die Ausführung der Wicklung in Kalottenform (einseitig) kann die Wicklung direkt aus dem Wicklungseinziehwerkzeug übernommen werden, da die Wicklungs-Fertiggeometrie dort fast dieser Form entspricht. Aufwendige beidseitige Vorform- und Zwischenformmaßnahmen entfallen; Nur ein leichtes Anpaßformen auf der Lagerschildseite reicht aus. Auf die Baugruppe Spalttopf-Rotor-oder fertigmontiert (oder Spalttopf ohne Rotor) wird der Stator mit Kalottenwicklung aufgesetzt. Der Spalttopf kann dabei als Werkstückträger für die gesamte nachfolgende Weiterverarbeitung des Motors oder der Pumpe verwendet werden (automatische Verkettung). Selbst das immer noch schwierig automatisierbare Verschalten der Einphasen- oder Dreiphasenwicklungen von Asynchronmaschinen kann auf dem als Werkstückträger benutzten Spalttopf vorgenommen werden.

Weiter integrierte Fertigungsschritte mit dem Spalttopf-Werkstückträger sind das Fertigmontieren des Stators auf dem Spalttopf (Statorsitz), das automatische Kontaktieren, das automatische Verbacken der Wicklung und elektrisches Prüfen der Statorwicklung bei komplettiertem Spalttopf, d.h. einschließlich der Baugruppe Rotor ist damit auch die vollständige elektrische Endkontrolle des Motors möglich. Nach diesem Fertigungsablauf des Motors ohne Gehäuse kann mit dem gleichen Werkstückträger die Pumpenmontage erfolgen. Ohne Motorgehäuse für Thermeneinbau und mit Motorgehäuse für externe Standardpumpen. Das Motorgehäuse kann in Kunststoff ausgeführt werden und hat nur noch eine Schutzfunktion.
Das fertigmontierte Motorgehäuse kann axial auf dem Spalttopf montiert und am Stator kontaktiert werden. Damit wird eine weitere Montage- und Demontagevereinfachung erzielt.

Bei dem Motorkonzept mit Kalottenwicklung wird das Gehäuse als Modul gestaltet, in das gleichzeitig der Klemmenanschlußraum integriert wurde. Dies ermöglicht ebenso die Aufnahme von Komponenten, wie Schalter, Kondensator oder komplette Regelelektronik mit Sensorik, z.B. kontinuierliche Drehzahlregelung, Differenzdruck-, Temperatur- und Volumenstromregelung. Die Gehäuserückseite kann dabei die Typenschilddaten und gleichzeitig ein Display mit Bedienfeld tragen zur Anzeige und Abfrage von Betriebsdaten. Für Diagnose und Zustandsüberwachung, sowie für externe zentrale Steuerung (Leitwarte) ist im Gehäusemodul eine Datenschnittstelle V24 oder RS232 vorgesehen. Die Befestigung des Gehäuses an der als Lagerschild ausgebildeten Seite des Spalttopfes ist für den Kunden lösbar ausgeführt und kann bei z.B. schadhafter Elektronik ausgetauscht werden. Die elektrischen Verbindungen können steckbar sein.

Das vorstehend beschriebene Konzept beschränkt sich nicht auf eine Leistungsbaugröße, sondern kann vollständig auf die im herkömmlichen Konstruktions- und Fertigungsprinzip angeführte Spaltrohrmotorenreihe übertragen werden, sowie Trockenläufermotore kleiner Leistung mit Eigenkühlung nur durch Konvektion. Es ist auch bei Ventilatoren anwendbar.

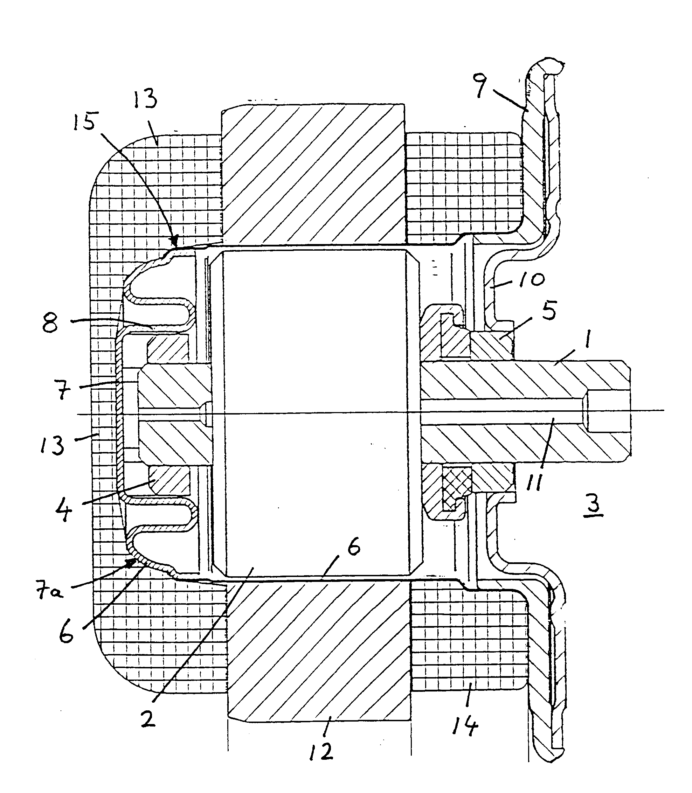

Vorteilhafte Ausgestaltungen der Erfindung sind in den Unteransprüchen aufgeführt. Ein Ausführungsbeispiel der erfindungsgemäßen Motors ist in der Zeichnung in einem axialen Schnitt dargestellt und wird im folgenden näher beschrieben.
Der insbesondere für Warmwasserheizungen bei Umwälzpumpen einsetzbare Spaltrohrmotor weist eine hohle Antriebsachse 1 auf, auf der das Rotorpaket 2 befestigt ist. Die Antriebsachse 1 ist auf der dem Pumpenraum 3 abgewandten Seite in einem Lager 4 und auf der zugewandten Seite in einem Lager 5 drehbar befestigt. Der Rotor 2 ist koaxial von einem zylindrischen Spalttopf 6 umgeben, der auf der dem Pumpenraum abgewandten Seite von einem Boden 7 verschlossen ist. Der Boden 7 kann einen nach innen gerichteten koaxialen Ringwulst 8 bilden, der das Lager 4 hält.

Auf der dem Pumpenraum 3 zugewandten Seite ist am Spalttopf 6 ein Flansch 9 befestigt oder angeformt, der die Trennwand 10 zwischen dem Inneren des Spalttopfes und dem Pumpenraum 3 trägt. In dieser Trennwand 10 ist das Lager 5 befestigt und über diese Trennwand 10 hinaus ragt die Antriebsachse 1 in den Pumpenraum 3 hinein, um mit diesem Ende den nicht dargestellten Pumpenrotor zu tragen. Das Innere des Spalttopfes 6 ist vom Fördermedium durchflossen, das auch durch den koaxialen Hohlraum 11 der Antriebsachse 1 fließt.

Im etwa mittleren, zylindrischen Bereich des Spalttopfes 6 ist außen das Stator-Blechpaket 12 aufgeschoben, das achsparallele Nuten besitzt, durch die die Wicklungsdrähte vom äußeren Wicklungskopf 13 zum inneren Wicklungskopf 14 verlaufen. Der Boden 7 des Spalttopfes 6 ist nach außen gewölbt, und die Wicklungen des Wicklungskopfes 13 liegen außen an dieser gewölbten Fläche des Bodens dicht an.

Hierzu müssen die Wicklungen des Kopfes 13 nur leicht verformt werden, so daß sie im wesentlichen eine gewölbte Form beibehalten, die sie nach dem Wickeln haben. Der Boden 7 bildet somit einen Werkstückträger und kann die Form einer Halbkugel, eines Kugelabschnitts (Kalotte) oder einer Kugelzone besitzen. Vorzugsweise ist der Boden des Spalttopfes im mittleren Bereich geringer gekrümmt als im daran anschließenden Randbereich. Insbesondere kann der Boden im mittleren Bereich eben sein, wobei dann diese ebene Fläche rechtwinklig zur Achse des Motors steht. Ferner kann der Boden des Spalttopfes im Schnitt die Form eines Korbbogens haben.

Ein sehr fester Halt der Wicklungen ist dann gegeben, wenn die Wicklungen am Boden 7 außen angebacken bzw. angeklebt sind. Die Außenfläche 7a des zylindrischen und des gewölbten Bereiches des Spalttopfes trägt hierzu eine dünne, elektrisch isolierende Schicht 15, insbesondere einen dünnen, elektrisch isolierenden Lack, mit einer hohen Wärmeleitfähigkeit. Die Schicht kann durch Pulverbeschichtung erzeugt worden sein. Insbesondere ist die Schicht ein Epoxydharz.

Das Gehäuse ist als Modul gestaltet, in das der Klemmenanschlußraum integriert ist, der Komponenten wie Schalter, Kondensator oder komplette Regelelektronik mit Sensorik, kontinuierlicher Drehzahlregelung, Differenzdruck-, Temperatur- und/oder Volumenstromregelung enthält. Die Gehäuserückseite trägt die Typenschilddaten und/oder gleichzeitig ein Display mit Bedienfeld zur Anzeige und Abfrage von Betriebsdaten. Für Diagnosen für Zustandsüberwachung und/oder für externe zentrale Steuerung (Leitwerte) im Gehäusemodul ist eine Datenschnittstelle (V24 oder RS232) vorgesehen. Das fertig montierte.

Motorgehäuse ist axial auf dem Spalttopf 6 montiert und am Stator 12-14 kontaktiert, so daß eine weitere Montagevereinfachung erzielt wird. Die Befestigung des Gehäuses an den insbesondere als Lagerschild ausgebildeten Seiten des Spalttopfes 6 ist lösbar und kann bei z.B. schadhafter Elektronik ausgetauscht werden. Hierzu sind die elektrischen Verbindungen steckbar. Auf dem Spalttopf 6 wird der Stator 12-14 aufgeschoben, bis der insbesondere kalottenförmige Wicklungsbereich des Wicklungskopfes 13 auf dem Spalttopfboden 7 aufliegt und auf diesem verbacken wird. Der Spalttopf 6 wird als Werkstückträger für die gesamte nachfolgende Weiterverarbeitung des Motors oder Pumpe verwendet. Auch wird das automatisierbare Verschalten der Einphasen- oder Dreiphasenwicklungen von Asynchronmaschinen auf dem als Werkstrückträger benutzten Spalttopf 6 vorgenommen. Ferner kann auf dem Spalttopf 6 das Fertigmontieren des Stators 12-14, das automatische Kontaktieren, das automatische Verbacken der Wicklung und elektrische Prüfen der Statorwicklung erfolgen. Mit dem Spalttopf 6 als Werkstückträger erfolgt auch die Pumpenmontage ohne Motorgehäuse für Heizkesseleinbau oder mit Motorgehäuse für externe Standardpumpen.

## Patentansprüche

1. Spaltrohr-Elektromotor, insbesondere für eine Pumpe, mit einem Statorblechpaket (12), das den Spalttopf (6) umgibt und von Wicklungen durchdrungen ist, die das Statorblechpaket (12) zu beiden Seiten überragen, wobei der Spalttopf (6) an demjenigen Ende geschlossen ist, und damit seinen Boden (7) bildet, das der Seite gegenüberliegt, an der die Antriebsachse (1) des Motors heraustritt, wobei der Boden (7) des Spalttopfes (6) nach außen gewölbt ist und die Wicklungen einer Seite (13) des Statorblechpaketes entsprechend gewölbt sind, **dadurch gekennzeichnet,** daß die Wicklungen an der gewölbten Fläche des Bodens (7) außen anliegen und daß die Wichlungen am Boden (7) außen angebacken bzw. angeklebt sind.

2. Spaltrohr-Elektromotor nach Anspruch 1, **dadurch gekennzeichnet,** daß die Wicklungen der einen Seite (13) nur leicht verformt am Boden (7) anliegen.

3. Spaltrohr-Elektromotor nach Anspruch 1 oder 2, **dadurch gekennzeichnet,** daß der Boden (7) des Spalttopfes (6) den Werkstückträger bildet.

4. Spaltrohr-Elektromotor nach einem der vorherigen Ansprüche, **dadurch gekennzeichnet,** daß der Boden (7) des Spalttopfes (6) die Form einer Halbkugel, eines Kugelabschnitts (Kalotte) oder einer Kugelzone aufweist.

5. Spalttrohr-Elektromotor nach einem der Ansprüche 1 bis 3, **dadurch gekennzeichnet,** daß der Boden (7) des Spalttopfes (6) im mittleren Bereich geringer gekrümmt ist als im daran anschließenden Randbereich.

6. Spaltrohr-Elektromotor nach Anspruch 5, **dadurch gekennzeichnet,** daß der Boden (7) des Spalttopfes (6) im mittleren Bereich etwa eben ist.

7. Spaltrohr-Elektromotor nach Anspruch 5, **dadurch gekennzeichnet,** daß der Boden (7) des Spalttopfes (6) im Schnitt die Form eines Korbbogens aufweist.

8. Spaltrohr-Elektromotor nach einem der vorherigen Ansprüche, **dadurch gekennzeichnet,** daß die Wicklungen (14) auf der dem Boden (7) gegenüberliegenden Seite am Spalttopf insbesondere an einem äußeren Flanschbereich (9) des Spalttopfes anliegen.

9. Spaltrohr-Elektromotor nach einem der vorherigen Ansprüche, **dadurch gekennzeichnet,** daß die Außenfläche des zylindrischen und des gewölbten Bereiches des Spalttopfes eine dünne, elektrisch isolierende Schicht (15),insbesondere einen dünnen, elektrisch isolierenden Lack trägt.

10. Spaltrohr-Elektromotor nach Anspruch 9, **dadurch gekennzeichnet,** daß die Schicht (15), insbesondere der Lack, eine hohe Wärmeleitfähigkeit aufweist.

11. Spaltrohr-Elektromotor nach Anspruch 9 oder 10, **dadurch gekennzeichnet,** daß die Schicht (15) durch Pulverbeschichtung erzeugt ist.

12. Spaltrohr-Elektromotor nach einem der Ansprüche 10 bis 12, **dadurch gekennzeichnet,** daß die Schicht (15) ein Epoxydharz ist.

13. Spaltrohr-Elektromotor nach einem der vorherigen Ansprüche, **dadurch gekennzeichnet,** daß das Gehäuse als Modul gestaltet ist, in das der Klemmenanschlußraum integriert ist, der Komponenten wie Schalter, Kondensator oder komplette Regelelektronik mit Sensorik, kontinuierliche Drehzahlregelung, Differenzdruck-, Temperatur- und/oder Volumenstromregelung enthält.

14. Spaltrohr-Elektromotor nach einem der vorherigen Ansprüche, **dadurch gekennzeichnet,** daß die Gehäuserückseite die Typenschilddaten und/oder gleichzeitig ein Display mit Bedienfeld zur Anzeige und Abfrage von Betriebsdaten trägt.

15. Spaltrohr-Elektromotor nach einem der vorherigen Ansprüche, **dadurch gekennzeichnet,** daß für Diagnose für Zustandsüberwachung und/oder für externe zentrale Steuerung (Leitwerte) im Gehäusemodul eine Datenschnittstelle (V24 oder RS232) vorgesehen ist.

16. Spaltrohr-Elektromotor nach einem der vorherigen Ansprüche, **dadurch gekennzeichnet,** daß das fertig montierte Motorgehäuse axial auf dem Spalttopf (6) montiert und am Stator (12-14) kontaktiert ist.

17. Spaltrohr-Elektromotor nach einem der vorherigen Ansprüche, **dadurch gekennzeichnet,** daß die Befestigung des Gehäuses an den insbesondere als Lagerschild ausgebildeten Seiten des Spalttopfes (6) lösbar ist.

18. Verfahren zum Herstellen eines Spaltrohr-Elektromotors nach einem der vorherigen Ansprüche, **dadurch gekennzeichnet,** daß auf den Spalttopf (6) der Stator (12-14) soweit aufgeschoben wird, bis der insbesondere kalottenförmige Wicklungsbereich des Wicklungskopfes (13) auf dem Spalttopfboden (7) aufliegt und auf diesem verbacken wird.

19. Verfahren nach Anspruch 18, **dadurch gekennzeichnet,** daß der Spalttopf (6) als Werkstückträger für die gesamte nachfolgende Weiterverarbeitung des Motors oder Pumpe verwendet wird.

20. Verfahren nach Anspruch 18 oder 19, **dadurch gekennzeichnet,** daß das automatisierbare Verschalten der Einphasen- oder Dreiphasenwicklungen von Asynchronmaschinen auf dem als Werkstückträger benutzten Spalttopf (6) vorgenommen wird.

21. Verfahren nach einem der vorherigen Ansprüche, **dadurch gekennzeichnet,** daß auf dem Spalttopf (6) das Fertigmontieren des Stators, das automatische Kontaktieren, das automatische Verbacken der Wicklung und elektrische Prüfen der Statorwicklung erfolgen.

22. Verfahren nach Anspruch 21, **dadurch gekennzeichnet,** daß mit dem Spalttopf (6) als Werkstückträger die Pumpenmontage ohne Motorgehäuse für Heizkesseleinbau oder mit Motorgehäuse für externe Standardpumpen erfolgt.

## Claims

1. A gap tube electric motor, more particularly for a pump, having a stator plate group (12) which encloses the gap pot (6) and through which windings extend which project beyond the stator plate group (12) on both sides, the gap pot (6) forming its end (7) by being closed at that end which is disposed opposite the side at which the driving shaft (1) of the motor emerges, the end (7) of the gap pot (6) being outwardly arched and the windings of one side (13) of the stator plate group being arched correspondingly, characterized in that the windings bear against the outside of the arched surface of the pot end (7), the windings being baked or glued to said end (7) on the outside.

2. A gap tube electric motor according to claim 1, characterized in that the windings of one side (13) bear only slightly deformed against the pot end (7).

3. A gap tube electric motor according to claims 1 or 2, characterized in that the end (7) of the gap pot (6) forms the workpiece support.

4. A gap tube electric motor according to one of the preceding claims, characterized in that the end (7) of the gap pot (6) takes the form of a hemisphere, a part-spherical portion or a spherical zone.

5. A gap tube electric motor according to one of claims 1 to 3, characterized in that the end (7) of the gap pot (6) has a lower curvature in the central zone than in the adjoining marginal zone.

6. A gap tube electric motor according to claim 5, characterized in that the end (7) of the gap pot (6) is substantially flat in the central zone.

7. A gap tube electric motor according to claim 5, characterized in that the end (7) of the gap pot (6) has the section the shape of a compound curve.

8. A gap tube electric motor according to one of the preceding claims, characterized in that on the side opposite the pot end (7) the windings (14) bear against the gap pot, more particularly against an outer flange zone (9) thereof.

9. A gap tube electric motor according to one of the preceding claims, characterized in that the external surface of the cylindrical and of the arched zone of the gap pot bears a thin electric insulating layer (15), more particularly a thin electric insulating lacquer.

10. A gap tube electric motor according to claim 9, characterized in that the layer (15), more particularly the lacquer, has a high thermal conductivity.

11. A gap tube electric motor according to claims 9 or 10, characterized in that the layer (15) is produced by powder coating.

12. A gap tube electric motor according to one of claims 10 to 12, characterized in that the layer (15) is an epoxy resin.

13. A gap tube electric motor according to one of the preceding claims, characterized in that the casing takes the form of a module in which the terminal connection space is integrated, which contains components such as a switch, capacitor or a complete electronic control system with a sensor system, continuous speed control, differential pressure, temperature and/or volumetric flow control.

14. A gap tube electric motor according to one of the preceding claims, characterized in that the rear side of the casing bears the type plate data and/or simultaneously a display with operating area for the display and the interrogation of operational data.

15. A gap tube electric motor according to one of the preceding claims, characterized in that a data interface (V24 or RS232) is provided in the casing module for diagnosis, state monitoring and/or external central control (guide values).

16. A gap tube electric motor according to one of the preceding claims, characterized in that the ready-mounted motor casing is mounted axially on the gap pot (6) and contacted on the stator (12-14).

17. A gap tube electric motor according to one of the preceding claims, characterized in that the attachment of the casing to the sides of the gap pot (6), more particularly taking the form of a bearing plate, is releasable.

18. A process for the production of a gap tube electric motor according to one of the preceding claims, characterized in that the stator (12-14) is slid on to the gap pot (6) until the more particularly part-spherical winding zone of the winding overhang (13) is borne on the gap pot end (7) and baked thereto.

19. A method according to claim 18, characterized in that the gap pot (6) is used as a workpiece support for the total subsequent further processing of the motor or pump.

20. A method according to claims 18 or 19, characterized in that the automatable wiring of the single-phase or three-phase windings of asynchronous machines is performed on the gap pot (6) used as a workpiece carrier.

21. A method according to one of the preceding claims, characterized in that the finished mounting of the stator, automatic contacting, the automatic baking of the winding and the electric testing of the stator winding are carried out on the gap pot (6).

22. A method according to claim 21, characterized in that pump mounting without a motor casing for the fitting of a heating boiler or with a motor casing for external standard pumps is performed using the gap pot (6) as a workpiece support.

## Revendications

1. Moteur électrique à gaine, en particulier pour une pompe, avec un empilage de tôles statoriques (12) qui entoure le pot d'entrefer (6) et est traversé par des enroulements qui font saillie des deux côtés par rapport à l'empilage de tôles statoriques (12), le pot d'entrefer (6) étant fermé à son extrémité qui est opposée au côté sur lequel sort l'axe d'entraînement (1) du moteur et formant ainsi son fond (7), le fond (7) du pot d'entrefer (6) étant cintré vers l'extérieur et les enroulements d'un côté (13) de l'empilage de tôles statoriques étant cintrés en correspondance, caractérisé en ce que les enroulements sont adjacents extérieurement à la surface cintrée du fond (7) et que les enroulements sont collés ou adhérés extérieurement au fond (7).

2. Moteur électrique à gaine selon la revendication 1,
caractérisé en ce que les enroulements dudit côté (13) sont adjacents au fond (7) en étant seulement légèrement déformés.

3. Moteur électrique à gaine selon la revendication 1 ou 2,
caractérisé en ce que le fond (7) du pot d'entrefer (6) forme les porte-pièces.

4. Moteur électrique à gaine selon l'une des revendications précédentes,
caractérisé en ce que le fond (7) du pot d'entrefer (6) a la forme d'une demi-sphère, d'une section de sphère (calotte) ou d une zone de sphère.

5. Moteur électrique à gaine selon l'une des revendications 1 à 3,
caractérisé en ce que le fond (7) du pot d'entrefer (6) est moins courbé dans la zone médiane que dans la zone de bord qui s'y raccorde.

6. Moteur électrique à gaine selon la revendication 5,
caractérisé en ce que le fond (7) du pot d'entrefer (6) est sensiblement plan dans la zone médiane.

7. Moteur électrique à gaine selon la revendication 5,
caractérisé en ce que le fond (7) du pot d'entrefer (6) présente en coupe la forme d'une anse de panier.

8. Moteur électrique à gaine selon l'une des revendications précédentes,
caractérisé en ce que les enroulements (14) sont adjacents, sur le côté opposé au fond (7), au pot d'entrefer, en particulier à une zone de flasque extérieure (9) du pot d'entrefer.

9. Moteur électrique à gaine selon l'une des revendications précédentes,
caractérisé en que la surface extérieure de la zone cylindrique et de la zone cintrée du pot d'entrefer porte une couche mince (15) électriquement isolante, en particulier une laque mince électriquement isolante.

10. Moteur électrique à gaine selon la revendication 9,
caractérisé en ce que la couche (15), en particulier la laque, présente une conductivité thermique élevée.

11. Moteur électrique à gaine selon la revendication 9 ou 10,
caractérisé en ce que la couche (15) est formée par enduction d'une poudre.

12. Moteur électrique à gaine selon l'une des revendication 10 et 11,
caractérisé en ce que la couche (15) est une résine époxy.

13. Moteur électrique à gaine selon l'une des revendications précédentes,
caractérisé en ce que le carter est réalisé sous forme de module dans lequel est intégrée la boîte des bornes de connexion, qui contient des composants tels qu'interrupteur, condensateur ou électronique de régulation complète avec analyse sensorielle, régulation continue de la vitesse de rotation, régulation de pression différentielle, de température et/ou de courant volumique.

14. Moteur électrique à gaine selon l'une des revendications précédentes,
caractérisé en ce que la face arrière du carter porte les données de plaque caractéristique et/ou simultanément un affichage avec tableau de commande pour l'affichage et l'interrogation de données opérationnelles.

15. Moteur électrique à gaine selon l'une des revendications précédentes,
caractérisé en ce qu'un interface de données (V 24 ou RS 232) est prévu dans le module de carter pour le diagnostic pour le contrôle d'état et/ou pour une commande centrale externe (susceptances).

16. Moteur électrique à gaine selon l'une des revendications précédentes,
caractérisé en ce que le carter de moteur à montage final est monté axialement sur le pot d'entrefer (6) et est en contact sur le stator (12-14).

17. Moteur électrique à gaine selon l'une des revendications précédentes,
caractérisé en ce que la fixation du carter sur les côtés du pot d'entrefer (6), en particulier réalisés sous forme de flasque, est amovible.

18. Procédé pour la fabrication d'un moteur électrique à gaine selon l'une des revendications précédentes,
caractérise en ce que le stator (12-14) est enfilé sur le pot d'entrefer (6) suffisamment loin pour que la zone des enroulements de la tête d'enroulement (13), en particulier en forme de calotte, repose sur le fond (7) du pot d'entrefer et soit agglutiné sur celui-ci.

19. Procédé selon la revendication 18,
caractérisé en ce que le pot d'entrefer (6) est utilisé comme porte-pièce pour l'ensemble des façonnages ultérieurs du moteur ou de la pompe.

20. Procédé selon la revendication 18 ou 19,
caractérisé en ce que le câblage automatisable des enroulements monophasés ou triphasés de machines asynchrones est effectué sur le pot d'entrefer (6) utilisé comme porte-pièce.

21. Procédé selon l'une des revendications précédentes,
caractérisé en ce que le montage final du stator, la connexion automatique, le collage automatique de l'enroulement et le test électrique de l'enroulement statorique se font sur le pot d'entrefer (6).

22. Procédé selon la revendication 21,
caractérisé en ce que le montage de la pompe, sans carter de moteur pour l'installation de chaudières de chauffage ou avec carter de moteur pour des pompes standards externes, est effectué avec le pot d'entrefer (6) comme porte-pièce.
